# EUROPEAN PATENT APPLICATION

(11) **EP 0 620 543 A1**
(43) Date of publication of application: **19.10.1994**
(21) Application number: 94302547.8
(22) Date of filing: 11.04.1994
(51) Int. Cl.: G09G 3/36

(54) **Liquid crystal display apparatus**

(30) Priority: 14.04.1993 JP 87011/93
(71) Applicant: INTERNATIONAL BUSINESS MACHINES CORPORATION, Armonk, N.Y. 10504 (US)
(72) Inventor: Suzuki, Hiroshi, Yamato-shi, Kanagawa-ken (JP); Suzuki, Midori, Machida-shi, Tokyo-to (JP)
(74) Representative: Moss, Robert Douglas

(57) **Abstract**

Provided is a liquid crystal display apparatus of active matrix type, in which a large number of gray levels can be displayed.

A drive circuit for driving a plurality of display panels comprises a plurality of sections each including a sample-and-hold circuit 22. The sample-and-hold circuit 22 has a plurality of switches Sw 1 through Sw 4. To these switches are separately supplied different ramp signals Vr 1 through Vr 4 from a ramp generator circuit 24 shared by all the sections. These ramp signals have waveforms which respectively assume a plurality of voltage levels and are shifted relative to each other by a predetermined level. A decoder 21 controls one of the switches Sw 1 through Sw 4 so that a specific order of voltage level in one of the ramp signals Vr 1 through Vr 4 is selected depending on the gray scale data in the latch 20. The output of the sample-and-hold circuit is transmitted to the data line 7a via a buffer 23.

## Description

### Field of the Invention

The present invention relates to a liquid crystal display (LCD) apparatus of active matrix type that displays gray scale and more particularly to a drive apparatus for producing a drive voltage on data lines of a display panel.

### Background

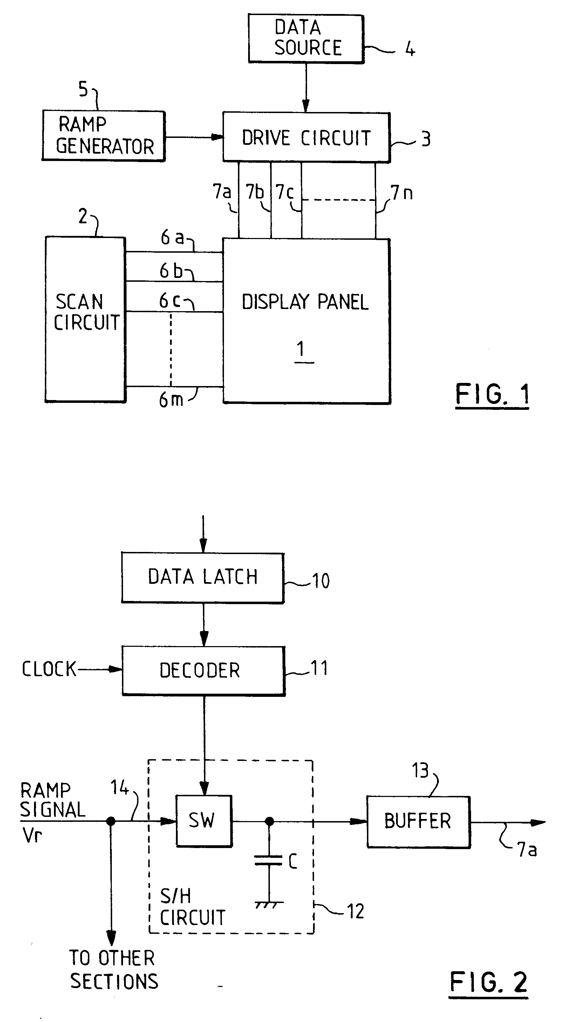

As a liquid crystal display (LCD) of active matrix type, a LCD having a construction schematically shown in Figure 1 is known. The LCD comprises a display panel 1, a scan circuit 2, a drive circuit 3, a data source 4 and a ramp generator 5. The display panel 1 is equipped with a plurality of gate lines 6a through 6m and a plurality of data lines 7a through 7n arranged in a matrix form. At each of crossing points of these gate lines and these data lines, a TFT device and a pixel electrode are mounted. The drive circuit 3 is a so-called digital-analog type circuit. The drive circuit 3 comprises a plurality of sections corresponding to the plurality of data lines. Each section receives gray scale data concerning one pixel from the data source 4. It also receives a ramp signal (staircase wave), which repetitively indicates a plurality of voltage levels corresponding to a plurality of gray scales, from the ramp generator 5. Each section selects a voltage level corresponding to the gray scale data and applies it to a corresponding data line. On the other hand, the scan circuit 2 successively supplies the gate line 6a through 6m with a gate pulse that continues for a predetermined time in synchronization with the ramp signal. The TFT selected by the gate pulse applies the voltage level of the data line to the pixel electrode associated with it to charge the liquid crystal electrostatic capacitance, thereby providing a gray scale display.

Each drive circuit section has a data latch 10, a decoder 11 and a sample hold circuit 12 and a buffer 13 as schematically shown in Figure 2. The gray scale data for one pixel held in the data latch 10 comprises bits in the number corresponding to the number of gray levels. In case of 16 gray scales, for example, the gray scale data comprises 4 bits. Then the ramp signal Vr applied to the line 14 assumes 16 voltage levels. The decoder 11 generates a sampling pulse for selecting the ramp voltage level corresponding to the gray scale data under the control of a clock. The sample-and-hold circuit 12 causes the switch Sw to conduct electricity in accordance with the sampling pulse to hold the specific voltage level in the capacitor C. The voltage level sampled and held in this way is applied to the data line 7a via a buffer 13.

Although the above art realizes gray scale display with up to 16 gray scale levels, it is desired to display a greater number of gray levels. However, the digital-analog type drive is attended with two problems that impede an appropriate increase of number of gray levels with respect to the sample-and-hold circuit.

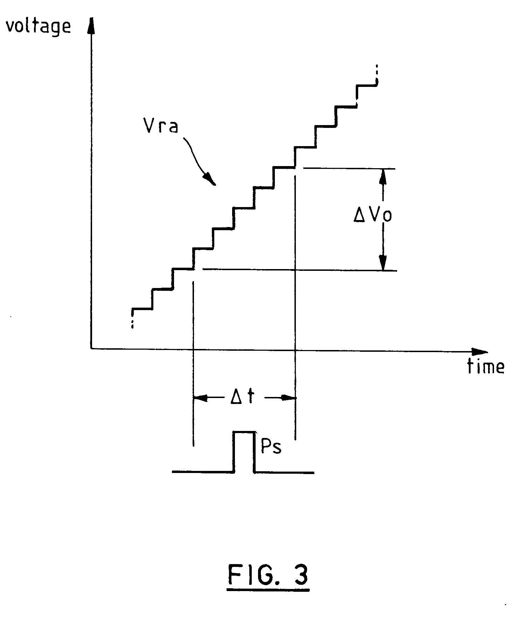

First of all, since a shift or an error in the timing of sample hold is reflected as an error in the output voltage as it is, there is a problem the errors become more and more likely to occur with an increase in the number of gray levels. In order to clarify this point, reference is made to Figure 3 showing a timing relation between the gray scale signal portion and the sampling pulse. Vra is, for example, a lamp signal for 64-level grey scale display. When the ramp signal Vra is sampled with the sampling pulse Ps, the presence of an error Δt in timing as shown in Figure 3 generates an error ΔVo with the result that a gray scale different from a desired gray scale will be displayed. As a countermeasure against this problem, it is considered to reduce the timing error Δt by improving an external clock that forms a norm for the generation of sampling pulse. Such improvement is not easy. In addition, when the number of gray levels is large, a considerable output voltage error still appears even if Δt is made smaller.

There is another problem concerning the width (duration time) of sampling pulse. Referring to Figure 3, the width of the sampling pulse Ps meets the step of ramp signal Vra. When the sampling time that follows such pulse is shorter than time required for appropriately charging the capacitor C of the sample hold circuit 12, there is a possibility that the specific voltage level of the ramp signal cannot be accurately sampled and held, thereby resulting in an error in output voltage.

It is apparent that the above problems become more and more serious with an increase in the number of gray levels, whereby an accurate gray scale display becomes more and more difficult. Therefore, there remains a problem of how to attain a greater number of gray levels in a liquid crystal display (LCD) apparatus of active matrix type whilst reducing eliminating the above problems.

### Summary of the Invention

A liquid crystal display apparatus of active matrix type according to a first aspect of the present invention has a liquid crystal panel with a plurality of gate lines and a plurality of data lines arranged in a matrix form, a scan means for successively producing scan signals on said plurality of gate lines, and drive means for producing output signals for gray scale display on said plurality of data lines in synchronization with said scan signals, and characterized in that the drive means comprises:
ramp generator means for generating a plurality of ramp signals in parallel, said ramp signals having waveforms which each respectively assume a plurality of voltage levels and are successively shifted relative to the other ramp signals by a predetermined voltage level such that for each of the gray levels of said gray scale display one of said ramp signals assumes a corresponding voltage level; and
selector means connected to said ramp generator means and responsive to gray scale data corresponding to each of said data lines for selecting one of said voltage levels in one of said ramp signals and to provide said selected voltage level as an output signal on the corresponding data line.

In a second aspect, the present invention provides a liquid crystal drive apparatus for generating output signals for gray scale display on a plurality of data lines of a liquid crystal display panel in a liquid crystal display apparatus of active matrix type, characterized by comprising:
a ramp generator for generating y ramp signals in parallel on its y output lines, said y ramp signals having waveforms which respectively assume x voltage levels and which are successively shifted relative to each other by a predetermined voltage level, said y and x each representing an integer equal to or greater than 2; and
a plurality of drive circuits connected commonly at their input sides to said y output lines of the ramp generator and connected separately at their output sides to said data lines;
wherein each of the drive circuits is responsive to gray scale data for a pixel for selecting one of said x voltage levels in one of said y ramp signals to provide a voltage level corresponding to said selected voltage level as an output signal on a corresponding data line.

The present invention thus provides an LCD drive apparatus that can produce an output voltage on the data line of a display panel with a reduction in errors even if the number of possible gray levels increases.

### Specific Description

The present invention will now be described in more detail with reference to particular embodiments and with reference to the accompanying drawings in which:
Figure 1 is a block diagram schematically illustrating a liquid crystal display apparatus of active matrix type according to the prior art;
Figure 2 is a view illustrating a drive circuit section included in the drive circuit shown in Figure 1, the section generating a drive signal in response to gray scale data for one pixel;
Figure 3 is a view illustrating the timing relationship between a ramp signal and a sampling signal, such as is known in the art;
Figure 4 is a view illustrating a ramp generator and a drive circuit section in an embodiment of the present invention; and
Figure 5 is a view illustrating the waveforms of four ramp signals generated by the ramp generator shown in Figure 4.

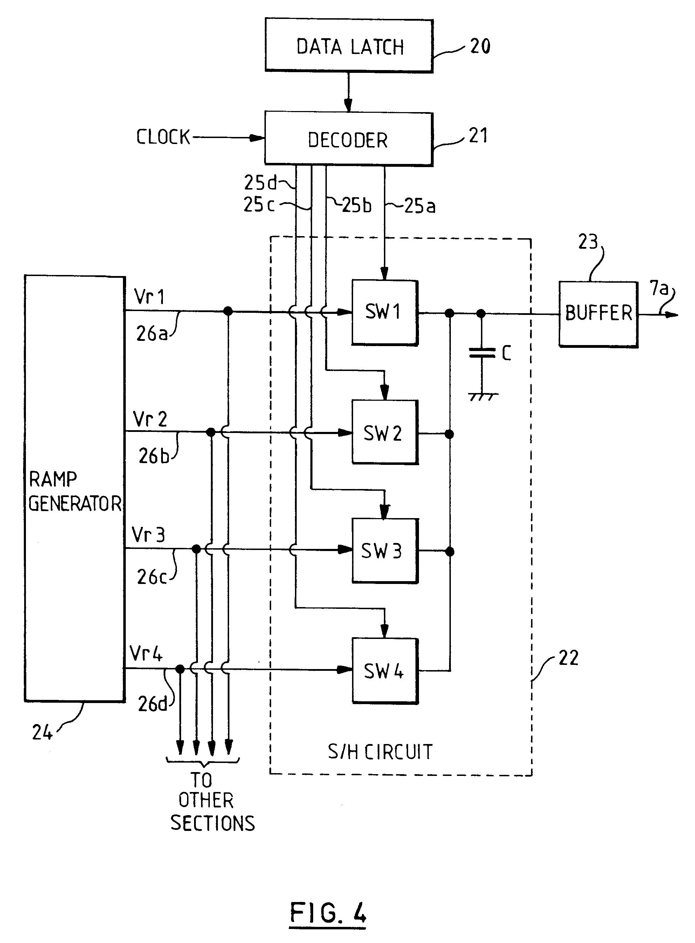

Figure 4 partially shows a LCD drive apparatus for displaying 64 gray scale levels. In particular, Figure 4 schematically shows only one of the plurality of drive circuit sections and the ramp generator circuit 24. The drive circuit section has a data latch 20, a decoder 21, a sample-and-hold circuit 22 and a buffer 23. The buffer 23 may be the same as an ordinary buffer 13 such as is known in the art. The ramp generator circuit 24 is so constituted to generate different ramp signals Vr 1, Vr 2, Vr 3, and Vr 4 to four lines 26a, 26b, 26c, 26d. The sample-and-hold circuit 22 has four switches Sw 1, Sw 2, Sw 3, and Sw 4. The input ends of these switches are separately connected to respective lines 26a through 26d whereas the output ends are commonly connected to a capacitor C for sample-and-hold. Furthermore, the control input end of switches Sw 1 through Sw 4 are respectively connected to the output lines 25a through 25d of the decoder 21.

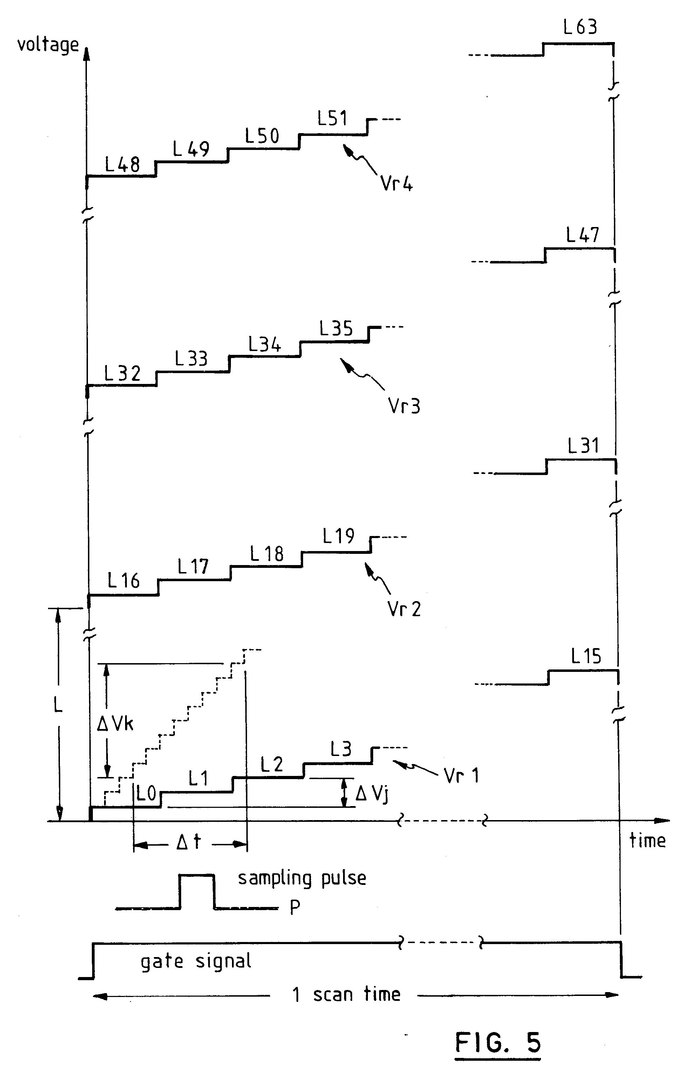

The embodiment of LCD drive apparatus displays 64 gray levels. As schematically shown in Figure 5, ramp signals Vr 1 through Vr 4 have waveforms which respectively assume 16 voltage levels and are each shifted relative to successive signals by a predetermined voltage level L. In other words, Vr 1 successively assumes voltage levels L0 through L15 in the scan of each line in the display panel, Vr 2 successively assumes voltage levels L16 through L31. Vr 3 successively assumes voltage levels L32 through L47. Vr 4 successively assumes voltage levels L48 through L63. On the other hand, in the data latch 20 is set gray scale data comprising 6 bits for designating any one of 64 gray scales, i.e. one of the voltage levels L0 through L63. The decoder 21 decodes gray scale data to generate a sampling pulse P at an appropriate timing for sampling the designated voltage level to one of the lines 25a through 25d that are connected to switches Sw 1 through Sw 4. With respect to gray scale data, upper 2 bits designate any of the ramp signals Vr 1 through Vr 4 whereas lower 4 bits designate which of the voltage levels in one of the ramp signals, namely the order of voltage level. For example, when the gray scale data is given as 010001, a timing pulse for sampling the voltage level L17 of the ramp signal Vr 2 is applied to the switch Sw 2.

For comparison, Figure 5 shows with a dot line a single ramp signal Vra used for 64-level gray scale display in accordance with the prior art. Vra must assume 64 voltage levels whereas each of Vr 1 through Vr4 only has to assume 16 voltage levels. Thus apparently, the change is very gradual. Consequently, it is apparent that, even if there is a timing shift Δt in the sampling pulse P, the error ΔVj in the current output voltage is considerably smaller than the error ΔVk in output voltage in cases where Vra is used. In addition, since the width of the sampling pulse P can be rendered relatively wide, the capacitor can be charged sufficiently, thereby resulting in a desired gray scale.

As can be seen from the waveforms of ramp signals Vr 1 through Vr 4, the embodiment in Figure 5 is considered as that constructed so as to be capable of displaying 64 gray scale levels by making relatively small modification to the circuit construction which is fundamentally adapted for 16-level gray scale display. With respect to the drive circuit, the data latch and the decoder in each section are slightly expanded, and additionally the number of switches in the sample-and-hold circuits and the number of associated wirings are slightly increased. But the IC chip size is hardly increased.

The embodiment mentioned above is just an example. Apparently the present invention is not limited to this embodiment. What is required is to generate a plurality of ramp signals. The number of ramp signals, the number of switches, the number of voltage levels included in each ramp signal and the number of gray levels are items that should be appropriately selected. For example, an alternative embodiment provides a gray scale display having the number of gray levels larger than 64 levels by further increasing the number of the ramp signals. In addition, a further embodiment displays 64 gray scale levels through the use of two ramp signals respectively assuming 32 voltage levels.

In universal terms, when the number of gray scale is z, the number of ramp signals is y, and the number of voltage levels in each ramp signal is x, it is only required to generate y ramp signals having waveforms shifted successively by a predetermined level so as to provide z different voltage levels corresponding to z gray levels as a whole, with maintaining a relation defined by xy = z. x, y and z are items that should be appropriately selected.

In accordance with the present invention, the number of gray levels displayed by the LCD of active matrix type can be considerably increased while reducing or eliminating problems associated with prior art LCD apparatus.

## Claims

1. A liquid crystal display apparatus of active matrix type having a liquid crystal display panel (1) with a plurality of gate lines (6a - 6m) and a plurality of data lines (7a - 7n) arranged in a matrix form, scan means (2) for successively producing scan signals on said plurality of gate lines, and drive means (3) for producing output signals for gray scale display on said plurality of data lines in synchronization with said scan signals; characterized in that said drive means comprises:
a ramp generator (24) for generating a plurality of ramp signals (Vr1 to Vr4) in parallel, said ramp signals having waveforms which each respectively assume a plurality of voltage levels and which are successively shifted relative to each other by a predetermined voltage level (L) such that for each of the gray levels of said gray scale display one of said ramp signals assumes a corresponding voltage level; and
selector means (22) connected to the ramp generator and responsive to gray scale data for individual pixels for selecting one of said voltage levels in one of said ramp signals and to provide a voltage level corresponding to said selected voltage level as an output signal on the corresponding data line for the particular pixel.

2. A liquid crystal drive apparatus for generating output signals for gray scale display on a plurality of data lines (7a - 7n) of a liquid crystal display panel in a liquid crystal display apparatus of active matrix type, characterized by comprising:
a ramp generator (24) for generating y ramp signals (Vr) in parallel on its y output lines (26), said y ramp signals having waveforms which respectively assume x voltage levels and which are successively shifted relative to each other by a predetermined voltage level (L), said y and x each representing an integer equal to or greater than 2; and
a plurality of drive circuits connected commonly at their input sides to said y output lines of the ramp generator and connected separately at their output sides to said data lines;
wherein each of the drive circuits is responsive to gray scale data for a pixel for selecting one of said x voltage levels in one of said y ramp signals to provide a voltage level corresponding to said selected voltage level as an output signal on a corresponding data line.

3. A liquid crystal drive apparatus according to claim 2 wherein each of said drive circuits comprises:
a sample-and-hold circuit (22) having y switches separately connected to y output lines of said ramp generator on the input side, each of said switches having a control input line;
a latch (20) for holding gray scale data; and
a decoder (21) having an input line connected to said latch and a separate output line (25) connected to each of said y switches, said decoder producing on one of its own output lines a sampling pulse for operating one of said y switches as determined by said grey scale data at a timing determined by said gray scale data.

4. A liquid crystal drive apparatus according to claim 3 wherein said x and y satisfy an equation of xy=z where z represents the total number of gray levels of said gray scale display, and said y ramp signals provide z different voltage levels.

5. A liquid crystal drive apparatus according to claim 3 or claim 4 wherein said gray scale data concerned with each pixel comprises a plurality of bits, a predetermined number of upper bits out of said plurality of bits representing one of said y ramp signals, and the remaining bits representing the order of x voltage levels in one ramp signal.
